(19) Europäisches Patentamt
European Patent Office
Office européen des brevets

(11) **EP 2 381 345 A1**

(12) **EUROPEAN PATENT APPLICATION**
published in accordance with Art. 153(4) EPC

(43) Date of publication:
**26.10.2011 Bulletin 2011/43**

(51) Int Cl.:
**G06F 3/042** (2006.01)   **G02F 1/133** (2006.01)
**G06F 3/041** (2006.01)   **G09F 9/00** (2006.01)
**G09F 9/30** (2006.01)

(21) Application number: **09838831.7**

(22) Date of filing: **28.08.2009**

(86) International application number:
**PCT/JP2009/065113**

(87) International publication number:
**WO 2010/084641 (29.07.2010 Gazette 2010/30)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.01.2009 JP 2009010232**

(71) Applicant: **Sharp Kabushiki Kaisha**
**Osaka-shi, Osaka 545-8522 (JP)**

(72) Inventors:
• **NOMA, Mikihiro**
**Osaka 545-8522 (JP)**
• **MIYAZAKI, Shinichi**
**Osaka 545-8522 (JP)**

• **TAKAHAMA, Kengo**
**Osaka 545-8522 (JP)**
• **YAHATA, Yoichiro**
**Osaka 545-8522 (JP)**
• **YOSHIMOTO, Yoshiharu**
**Osaka 545-8522 (JP)**
• **MAEDA, Kazuhiro**
**Osaka 545-8522 (JP)**

(74) Representative: **Müller - Hoffmann & Partner**
**Patentanwälte**
**Innere Wiener Strasse 17**
**81667 München (DE)**

(54) **LIQUID CRYSTAL DISPLAY DEVICE PROVIDED WITH LIGHT INTENSITY SENSOR**

(57) A liquid crystal display device of the present invention includes a liquid crystal panel (20) having an area sensor function of detecting the position of an input from an outside source by detecting an image on a panel surface. The liquid crystal panel (20) has a plurality of light sensor elements (30) that detect the intensity of received light. The liquid crystal panel (20) is provided with: a light intensity sensor section (50), constituted by those ones of the light sensor elements (30) which are disposed in an outermost peripheral part of a display region (20a) of the liquid crystal panel (20), which detects the intensity of light in an environment where the device is placed; and visible light sensors (31A) and infrared light sensors (31B), constituted by those ones of the light sensor elements (30) other than those constituting the light intensity sensor section (50), which detect the position of an input from an outside source by the light sensor elements detecting an image on the panel surface. This allows some of the light sensor elements to be used as a light intensity sensor to more accurately measure light intensity.

FIG. 1

## Description

Technical Field

The present invention relates to a liquid crystal display device equipped with an area sensor, having light sensor elements built-in, in which the light sensor elements are used as a light intensity sensor.

Background Art

Flat-panel display devices, typified by liquid crystal display devices, have such features as thinness, lightweight, and low power consumption and, further, have been under technically developed for improvements in display performance such as colorization, higher definition, and moving-image response. As such, display devices have now been incorporated into a wide range of electronic devices such as cellular phones, PDAs, DVD players, mobile game machines, laptop PCs, PC monitors, and TVs.

For the purpose of better viewability and lower power consumption for liquid crystal display devices, Patent Literature 1 proposes a liquid crystal display device in which the luminance of a backlight is controlled according to the brightness of outside light (ambient conditions). This liquid crystal display device has an illuminance sensor, attached to the front surface of a display section thereof, which serves to measure the brightness of outside light.

A liquid crystal display device including such an illuminance sensor can realize both satisfactory viewability in face of a change in brightness of the use environment and lower power consumption and therefore is useful, in particular, for a mobile device (such as a cellular phone, a PDA, or a mobile game machine) that is often used in an outdoor location and requires battery driving.

Citation List

Patent Literature 1
Japanese Patent Application Publication, Tokukaisho, No. 62-34132 (Publication Date: February 14, 1987)
Patent Literature 2
Japanese Patent Application Publication, Tokukai, No. 2006-18219 (Publication Date: January 19, 2006)

Summary of Invention

Technical Problem

Meanwhile, among display devices, touch-panel-integrated display devices have been developed each of which has a touch panel (area sensor) function that makes it possible to detect the position of contact of an input pen with the panel surface.

As such a touch-panel-integrated liquid crystal display device, a liquid crystal display device has recently been developed which has a light sensor element such as a photodiode or a phototransistor provided in each pixel (or in each unit of a plurality of pixels) within an image display region (e.g., see Patent Literature 2). By thus having a light sensor element built in each pixel, an ordinary liquid crystal display device can fulfill a function as an area sensor (specifically, a scanner function, a touch panel function, etc.). That is, by such light sensor elements fulfilling a function as an area sensor, a display device integrated with a touch panel (or with a scanner) can be achieved.

In a liquid crystal display device provided with an area sensor having such light sensor elements built-in, it is possible, for example, to control the light sensitivity of the area sensor according to ambient environmental illuminances. In this case, by attaching such an illuminance sensor as the one described in Patent Literature 1 to the liquid crystal display device having the light sensor elements built-in, the liquid crystal display device is allowed to measure an environmental illuminance and switch sensor sensitivities according to the environmental illuminance thus measured.

However, witch such an external illuminance sensor, which is different in sensor characteristic such as spectral sensitivity characteristic, threshold value, and light sensitivity from those light sensor elements provided in the display region of the liquid crystal display device, there occurs such a problem that an illuminance cannot be accurately reflected in the light sensor elements. Further, the external illuminance sensor and those light sensor elements in the liquid crystal display device are those formed by different designs and processes. Therefore, in the case of use of the external illuminance sensor (or light intensity sensor) to estimate an output value of those light sensor elements in the liquid crystal display device, there also occurs such a problem, due to the influence of variations in production, that the output of those light sensor elements in the liquid crystal display device cannot be accurately estimated based on data obtained by the external illuminance sensor.

Further, a similar problem occurs also when the illuminance sensor is placed in a place remote from the display region. Furthermore, even when the illuminance sensor is provided in a place close to the display region, accidental presence above the illuminance sensor of a person's hand touching the display screen causes the illuminance sensor to erroneously output a lower value of environmental illuminance than the actual environmental illuminance, if the illuminance sensor is placed only in a limited region.

In addition to this, the provision of the external illuminance sensor (or light intensity sensor) presents obstacles to reductions in size and thickness of the device. Further, the provision of such an external component leads to an increase in cost.

The present invention has been made in view of the foregoing problems, and it is an object of the present invention to provide a liquid crystal display device equipped with an area sensor, having light sensor elements built-in, in which the light sensor elements are used as a light intensity sensor to more accurately measure light intensity.

Solution to Problem

In order to solve the foregoing problems, a liquid crystal display device according to the present invention is a liquid crystal display device (i) including a liquid crystal panel having an active matrix substrate, a counter substrate, and a liquid crystal layer disposed therebetween and (ii) having an area sensor function of detecting the position of an input from an outside source by the liquid crystal panel detecting an image on a panel surface, the liquid crystal panel having a plurality of light sensor elements that detect the intensity of received light, the liquid crystal panel including: a light intensity sensor section, constituted by those ones of the light sensor elements which are disposed in an outermost peripheral part of a display region of the liquid crystal panel, which detects the intensity of light in an environment where the liquid crystal display device is placed; and an area sensor section, constituted by those ones of the light sensor elements other than those constituting the light intensity sensor section, which detects the position of an input from an outside source by the light sensor elements detecting an image on the panel surface, those light sensor elements constituting the intensity light sensor section and those constituting the area sensor section being those formed by an identical manufacturing process on the active matrix substrate, those light sensor elements constituting the intensity light sensor section being lower in light sensitivity than those constituting the area sensor section by a predetermined percentage.

In the liquid crystal display device having an area sensor function of the present invention, those light sensor elements disposed in the outermost peripheral part of the display region are used as the light intensity sensor. Thus, in the liquid crystal display device of the present invention, out of those light sensor elements formed within the liquid crystal panel to achieve an area sensor function, those light sensor elements disposed in the outermost peripheral part of the display region are used as the light intensity sensor.

Therefore, those light sensor elements for use in the light intensity sensor and those for use in the area sensor can be formed by the same manufacturing process. That is, the light sensor elements for use in the light intensity sensor and those for use in the area sensor are those formed by an identical manufacturing process on the active matrix substrate. This makes it possible to match the sensor characteristics of those light sensor elements for use in light intensity sensor and of those for use in the area sensor, so that the intensity of environmental light as obtained by the light intensity sensor can be accurately reflected in those light sensor elements for use in the area sensor. That is, this makes it possible to accurately estimate an output of the area sensor in response to environmental light.

Further, since the number of components can be made smaller than in the case of provision of an external light intensity sensor, the device can be made smaller, thinner, and lighter, and can also be manufactured at a lower cost.

Further, by providing a light intensity sensor in the outermost peripheral region of the display region, a more accurate environmental light intensity can be obtained than in the case of provision of a light intensity sensor only in a portion (dot region) of the display region.

Further, in the liquid crystal display device, those light sensor elements for use as the light intensity sensor is lower in light sensitivity than those for use as the area sensor by a predetermined percentage. This allows those light sensor elements for use as the light intensity sensor to have their sensor output saturated at higher light intensity than those for use as the area sensor. Moreover, by adjusting the percentage by which light sensitivity is reduced, light sensor elements can be obtained which are not saturated in a range of light intensities to be measured, and the light intensity measured can be accurately reflected in the area sensor.

The liquid crystal display device of the present invention is preferably configured such that the light intensity sensor section has a plurality of light sensor elements and obtains the intensity of environmental light on the basis of an average of values of intensity of light detected by those light sensor elements.

According to the foregoing configuration, an average of values detected by those light sensor elements disposed in the outermost peripheral part of the display region is taken as a measured value; therefore, a more accurate environmental light intensity can be obtained. For example, even in the presence of an obstacle such as a hand over a portion of the outermost peripheral part of the display region, an error between the actual environmental light intensity and the measured environmental light intensity can be made smaller by taking an average with the values detected by those light sensor elements disposed in another portion of the outermost peripheral part of the display region.

The liquid crystal display device of the present invention is preferably configured such that the light intensity sensor section detects the intensity of infrared light in the environment where the liquid crystal display device is placed.

The foregoing configuration allows the liquid crystal display to detect the intensity of infrared light in the environment.

The liquid crystal display device of the present invention is preferably configured such that as seen from the panel surface of the liquid crystal panel, those light sensor elements constituting the intensity light sensor section are smaller in aperture ratio than those constituting the area sensor section by a predetermined percentage.

The term "aperture ratio of light sensor elements as seen from the panel surface of the liquid crystal panel" here means the percentage of an area not shielded from light to the area of the whole light-receiving surface of the light sensor elements, with the light sensor elements seen from the panel surface.

According to the foregoing configuration, those light sensor elements constituting the intensity light sensor section can be made lower in light sensitivity than those constituting the area sensor section by a predetermined percentage.

The liquid crystal display device of the present invention is preferably configured such that those light sensor elements constituting the intensity light sensor section include those on which a light blocking section is provided and those on which no light blocking section is provided.

According to the foregoing configuration, those light sensor elements constituting the intensity light sensor section can be made lower in light sensitivity than those constituting the area sensor section by a predetermined percentage (specifically, (Number of Light Sensor Elements Not Provided with Light Blocking Section) / (Total Number of Light Sensor Elements Constituting Light Intensity Sensor Section)).

The foregoing liquid crystal display device is preferably configured such that the ratio of the number of those light sensor elements provided with the light blocking section to the number of those not provided with the light blocking section is $(n_1-1):1$ (where $n_1$ is an integer of 2 or greater).

According to the foregoing configuration, those light sensor elements constituting the intensity light sensor section can be made lower in light sensitivity than those constituting the area sensor section by $1/n_1$.

The liquid crystal display device of the present invention is preferably configured such that on each of those light sensor elements constituting the intensity light sensor section, a dark filter is provided which reduces, by a predetermined percentage, light that enters the liquid crystal panel through the surface.

According to the foregoing configuration, those light sensor elements constituting the intensity light sensor section can be made lower in light sensitivity than those constituting the area sensor section by a predetermined percentage.

The liquid crystal display device of the present invention is preferably configured to further include a driving circuit for driving the light sensor elements, wherein those light sensor elements constituting the intensity light sensor section include those connected to the driving circuit and those not connected to the driving circuit.

According to the foregoing configuration, those light sensor elements not connected to the driving circuit no longer function as a light intensity sensor, and only those connected to the driving circuit function a light intensity sensor, whereby those light sensor elements constituting the intensity light sensor section can be made lower in light sensitivity than those constituting the area sensor section by a predetermined percentage (specifically, (Number of Light Sensor Elements Connected to Driving Circuit) / (Total Number of Light Sensor Elements Constituting Light Intensity Sensor Section)).

The foregoing liquid crystal display device is preferably configured such that the ratio of the number of those light sensor elements connected to the driving circuit to the number of those not connected to the driving circuit is $(n_2-1):1$ 1 (where $n_2$ is an integer of 2 or greater).

According to the foregoing configuration, those light sensor elements constituting the intensity light sensor section can be made lower in light sensitivity than those constituting the area sensor section by $1/n_2$.

The foregoing liquid crystal display device is preferably configured to further include a driving circuit that changes, in accordance with the intensity of light as obtained by the light intensity sensor section, a period of sensing time during which those light sensor elements constituting the area sensor section carry out sensing.

According to the foregoing configuration, a period of sensing time during which those light sensor elements constituting the area sensor section carry out sensing can be controlled in accordance with the intensity of light (i.e., the intensity of environmental light) as obtained by the light intensity sensor section; therefore, a more accurate position detection can be achieved in the area sensor section.

Advantageous Effects of Invention

In a liquid crystal display according to the present invention, the liquid crystal panel has a plurality of light sensor elements that detect the intensity of received light, the liquid crystal panel including: a light intensity sensor section, constituted by those ones of the light sensor elements which are disposed in an outermost peripheral part of a display region of the liquid crystal panel, which detects the intensity of light in an environment where the liquid crystal display device is placed; and an area sensor section, constituted by those ones of the light sensor elements other than those constituting the light intensity sensor section, which detects the position of an input from an outside source by the light sensor elements detecting an image on the panel surface, those light sensor elements constituting the intensity light sensor section and those constituting the area sensor section being those formed by an identical manufacturing processes on the active matrix substrate, those light sensor elements constituting the intensity light sensor section being lower in light sensitivity than those constituting the area sensor section by a predetermined percentage.

Therefore, the present invention allows a liquid crystal display device equipped with an area sensor having light sensor elements built-in to more accurately measure light intensity by using the light sensor elements as a light intensity sensor. This makes it possible to accurately estimate an output of the area sensor in response to environmental light.

Brief Description of Drawings

Fig. 1

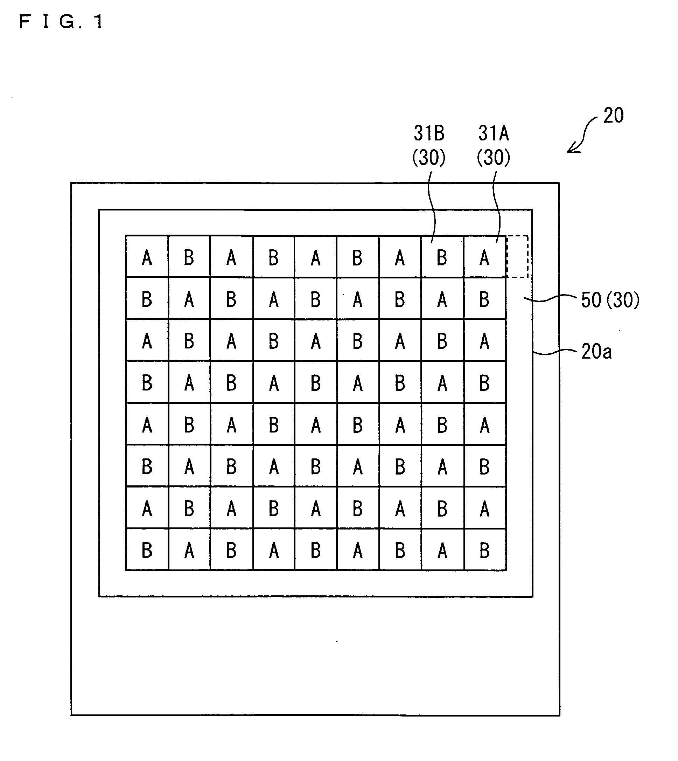

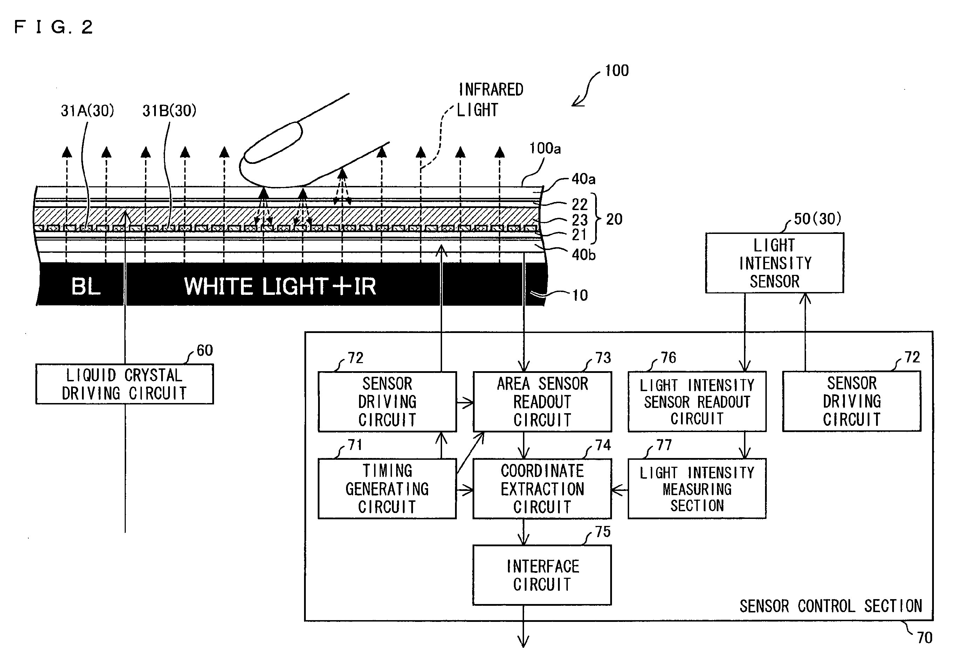

Fig. 1 is a plan view showing the configuration of each sensor in a liquid crystal panel provided in a liquid crystal display device shown in Fig. 2.
Fig. 2
Fig. 2 is a schematic view showing the configuration of a liquid crystal display device according to a first embodiment of the present invention.
Fig. 3

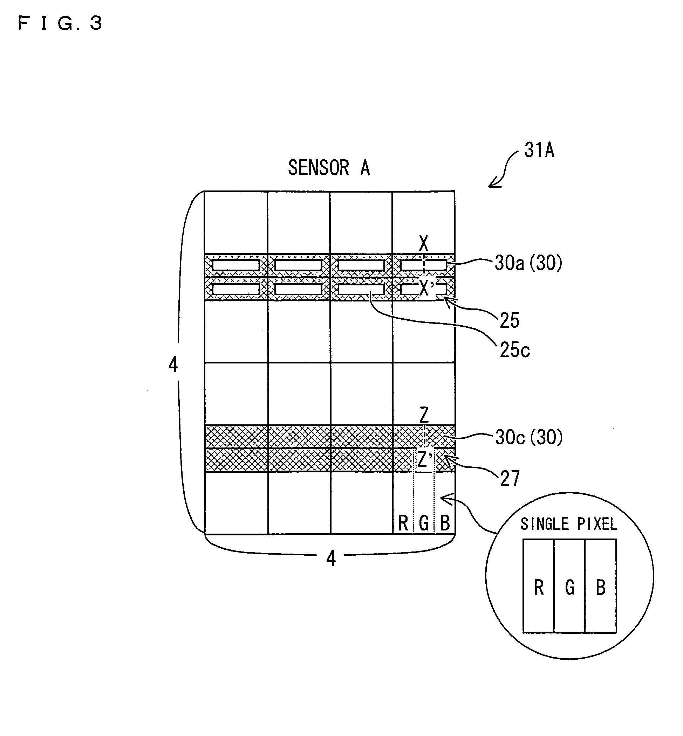

Fig. 3 is a schematic view showing the configuration of each sensor A (visible light sensor) provided in the liquid crystal panel shown in Fig. 1.
Fig. 4

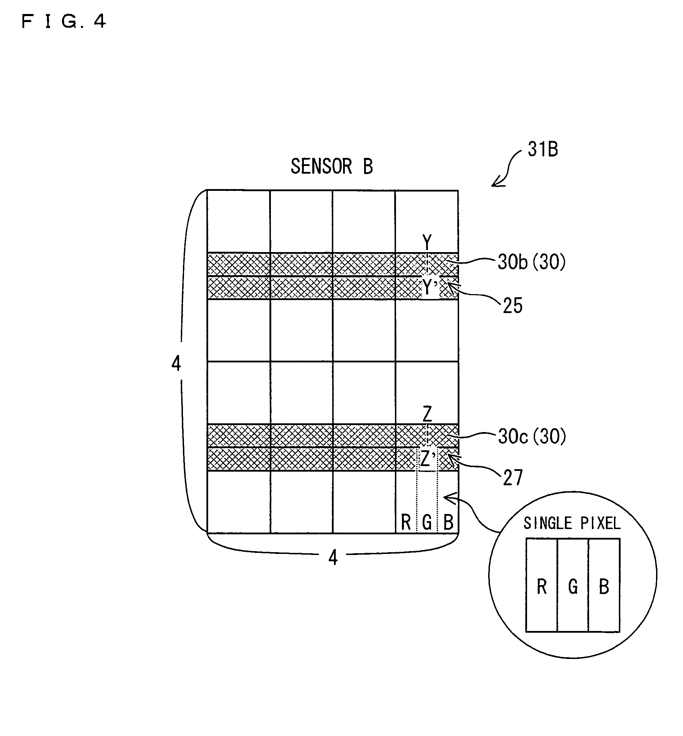

Fig. 4 is a schematic view showing the configuration of each sensor B (infrared light sensor) provided in the liquid crystal panel shown in Fig. 1.
Fig. 5

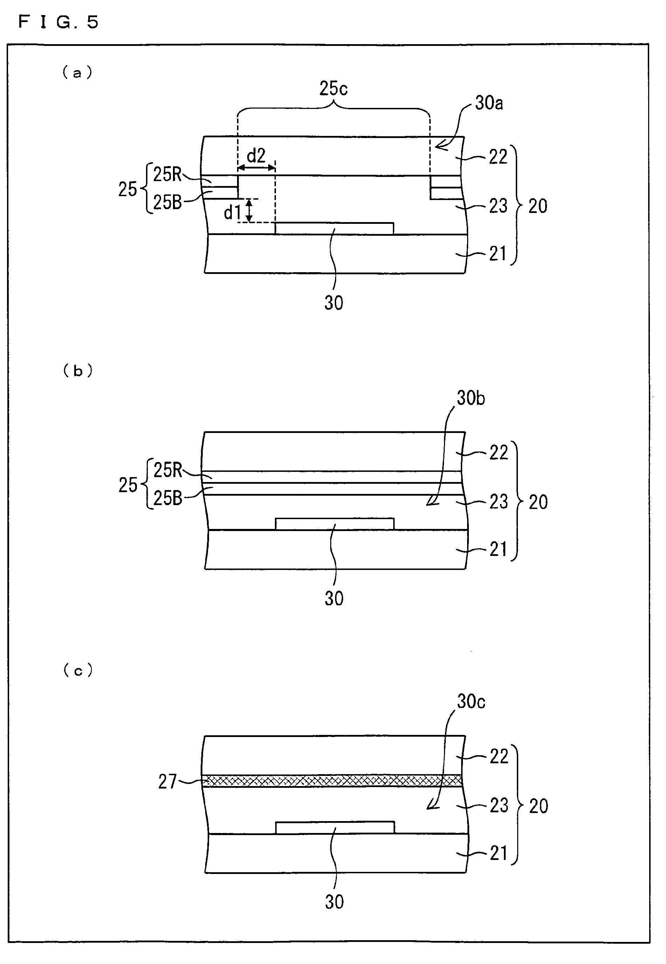

Fig. 5 includes: (a) a cross-sectional view showing the configuration of the visible light sensor as taken along line X-X' in Fig. 3; (b) a cross-sectional view showing the configuration of the infrared light sensor as taken along line Y-Y' in Fig. 4; (c) a cross-sectional view showing the configuration of the visible light sensor or of the infrared light sensor as taken along line Z-Z' in Fig. 3 or 4.
Fig. 6

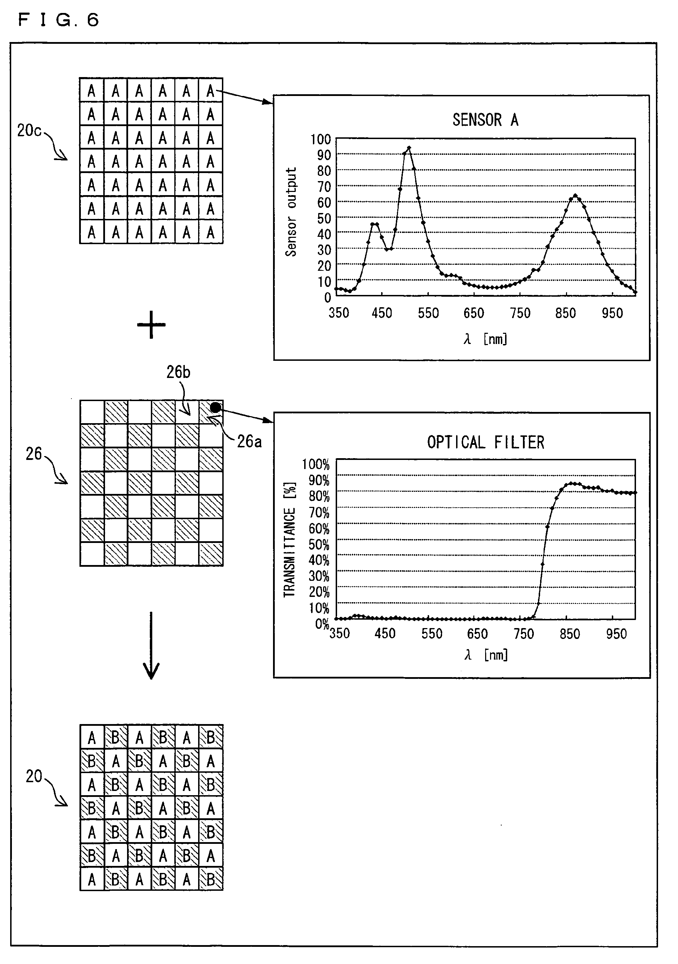

Fig. 6 is a schematic view for explaining the configuration of the liquid crystal panel shown in Fig. 1.
Fig. 7

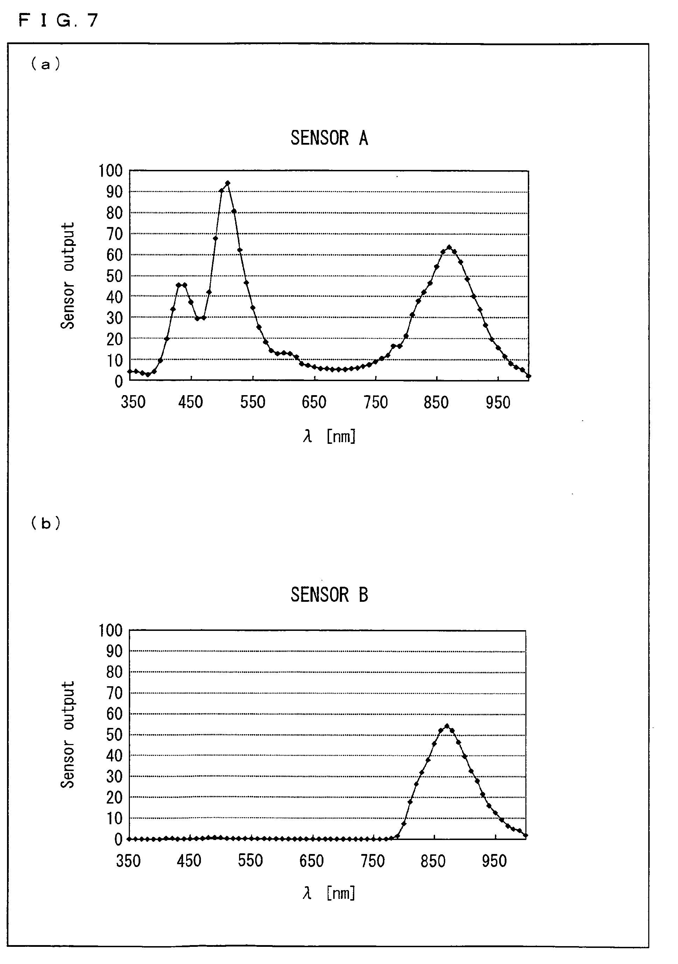

Fig. 7 includes (a) a graph showing the spectral sensitivity (sensor output as a function of wavelength) of the sensors A of the liquid crystal panel 20 shown in Fig. 6; and (b) a graph showing the spectral sensitivity (sensor output as a function of wavelength) of the sensors B of the liquid crystal panel 20 shown in Fig. 6.
Fig. 8

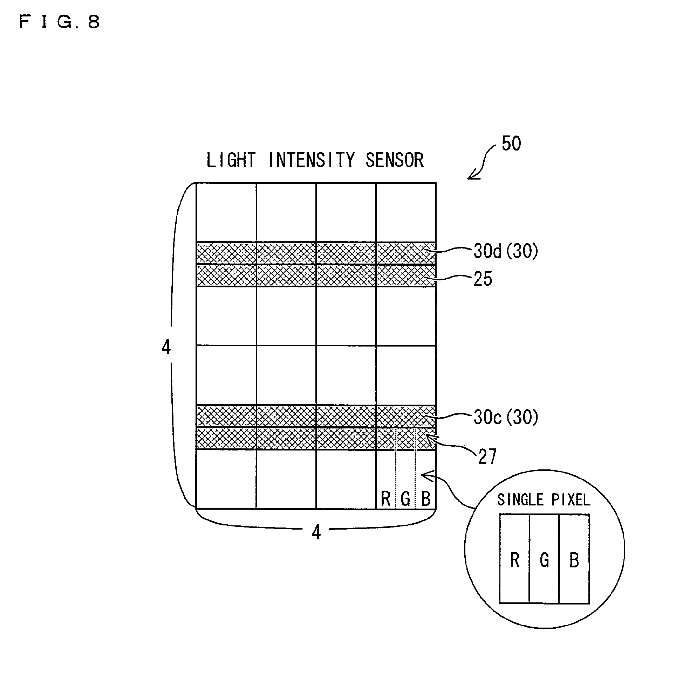

Fig. 8 is a schematic view showing the configuration of a light intensity sensor provided in the liquid crystal panel shown in Fig. 1.
Fig. 9

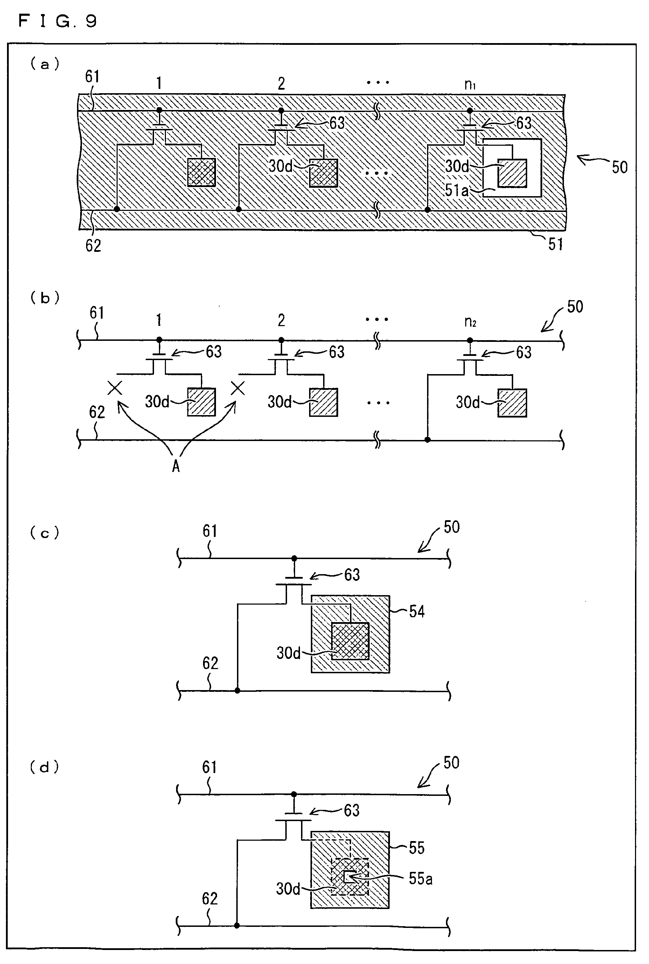

Fig. 9 includes schematic views (a) through (d) showing example configurations of a light intensity sensor provided in the liquid crystal panel shown in Fig. 1.
Fig. 10

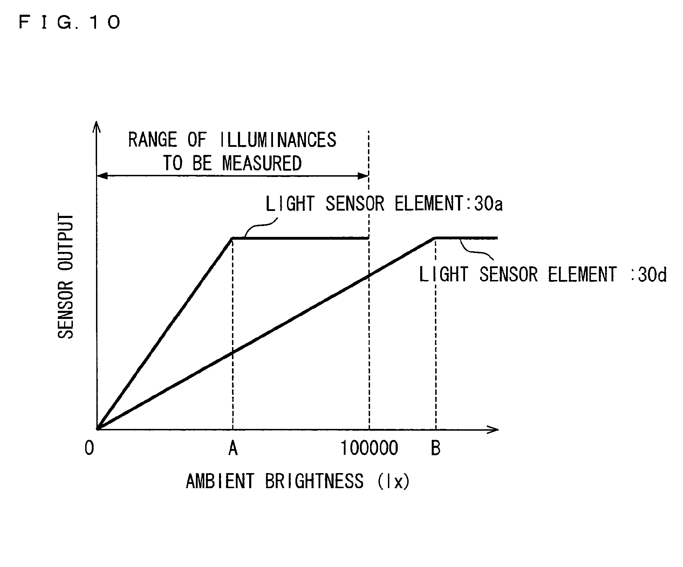

Fig. 10 is a graph showing the sensor output characteristics of light sensor elements constituting the visible light sensors and those constituting the light intensity sensor with respect to the ambient illuminance.
Fig. 11

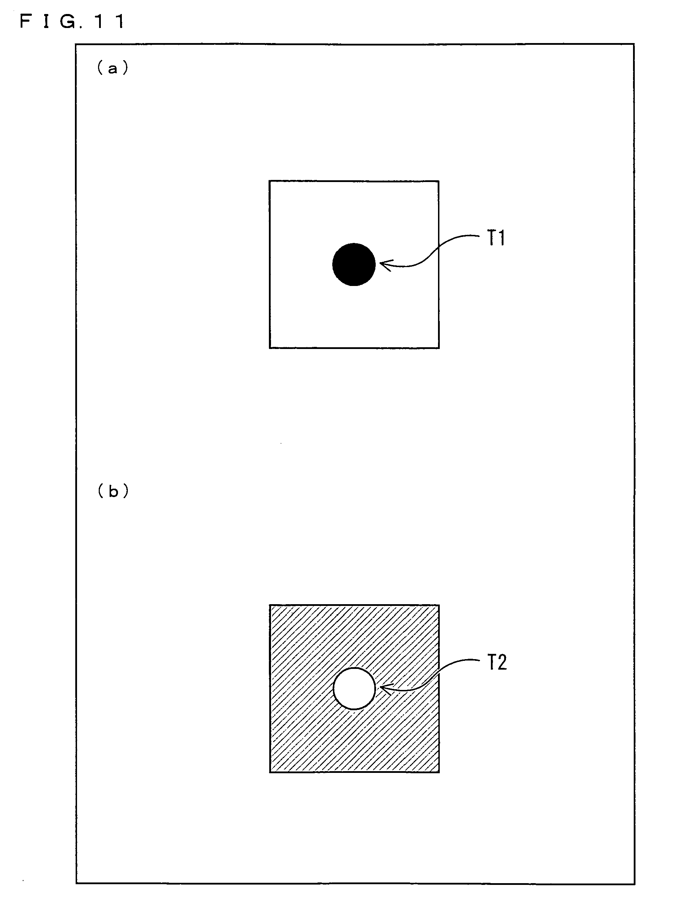

Fig. 11 includes: (a) a schematic view showing an image that is recognized when the sensors A are used; and (b) a schematic view showing an image that is recognized when the sensors B are used.
Fig. 12

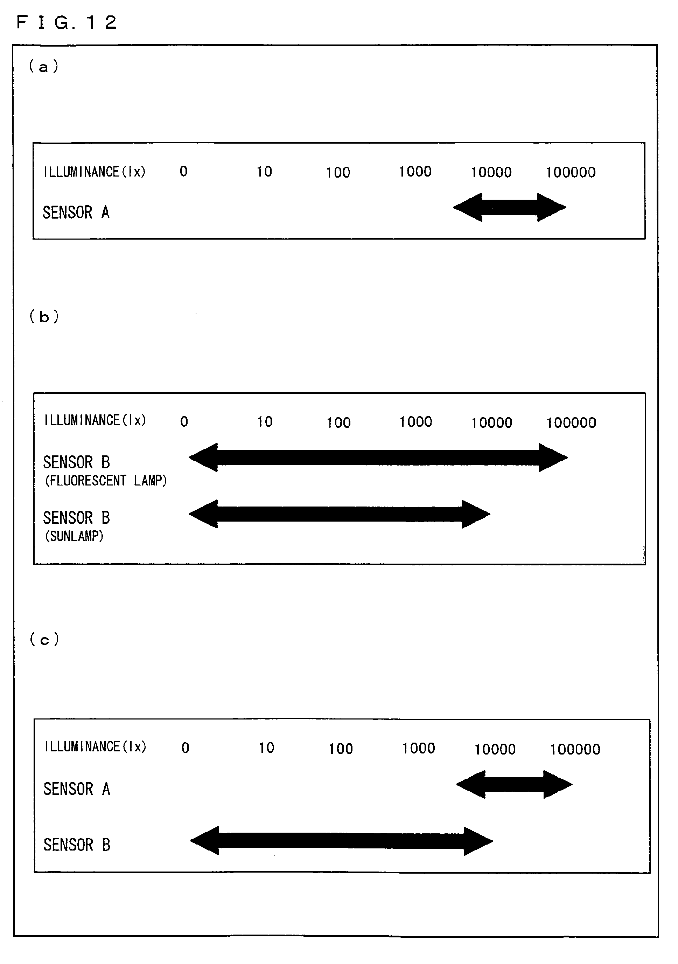

Fig. 12 includes: (a) a schematic view showing a target range of illuminances suitable for the sensors A to carry out detection; (b) a schematic view showing a target range of illuminances suitable for the sensors B to carry out detection; and (c) a schematic view showing a target range of illuminances suitable for both the sensors A and B to carry out detection.
Fig. 13

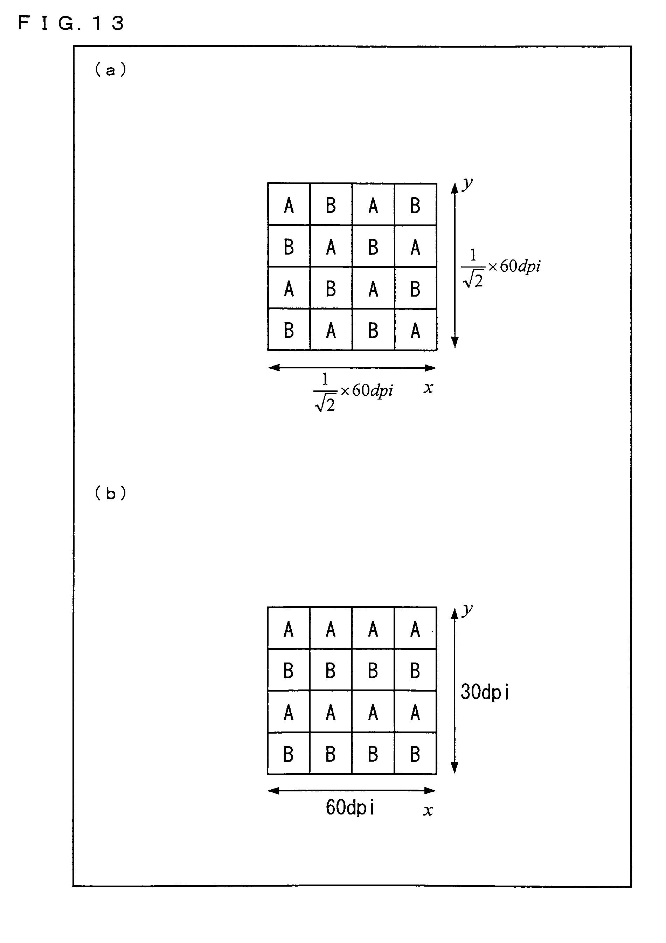

Fig. 13 includes: (a) a schematic view showing an example configuration of a liquid crystal panel having its sensors A and B disposed alternately in a checkered pattern; and (b) a schematic view showing an example configuration of a liquid crystal panel having its rows of sensors A and rows of sensors B disposed alternately.
Fig. 14

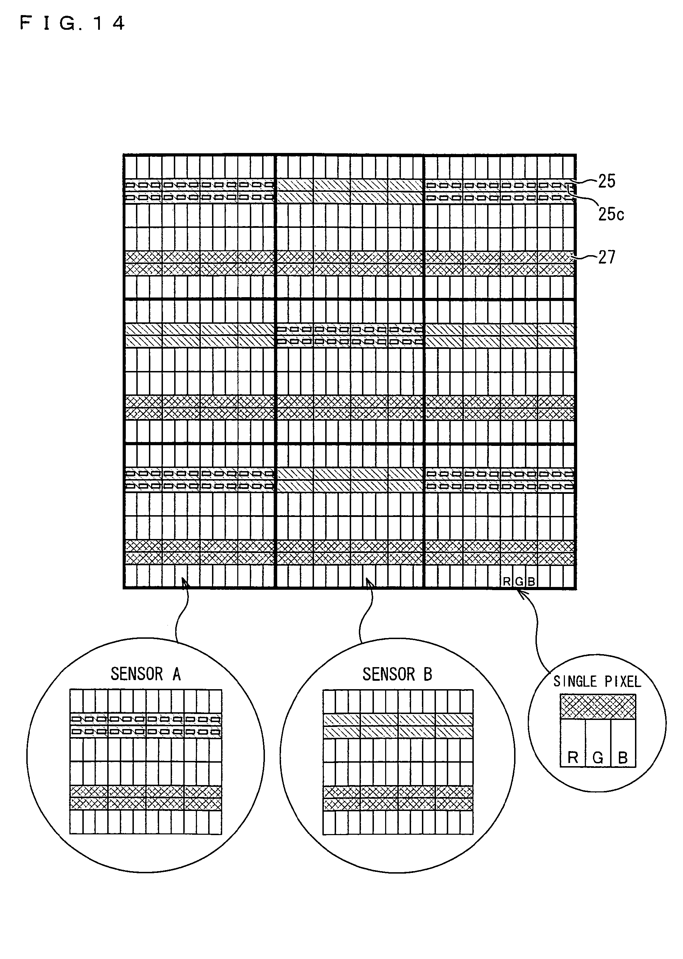

Fig. 14 is a schematic view showing an example of the structure of a liquid crystal panel having its sensors A and B disposed alternately in a checkered pattern.
Fig. 15

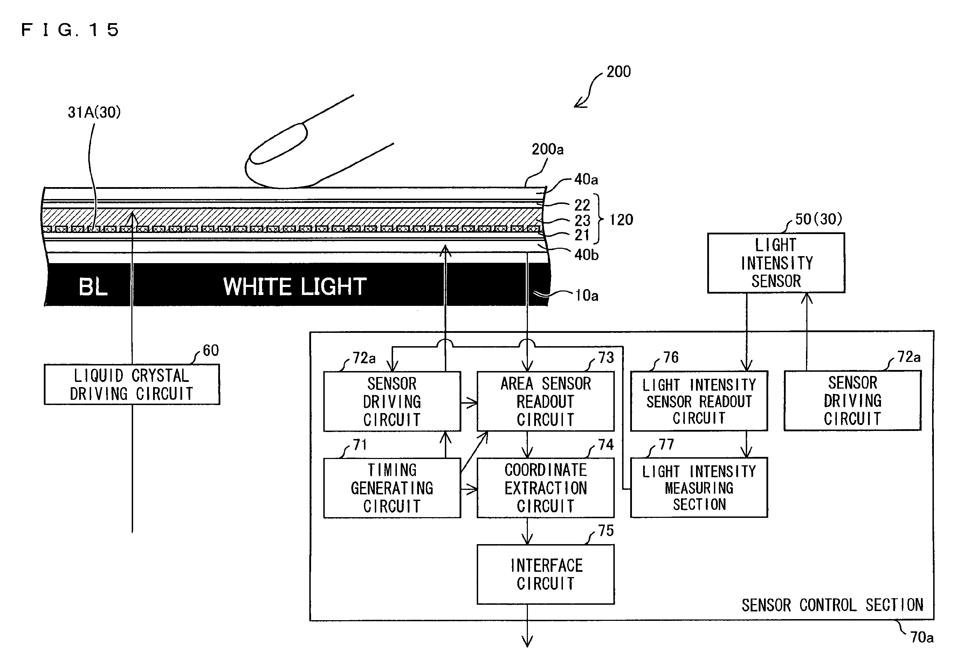

Fig. 15 is a schematic view showing the configuration of a liquid crystal display device according to a second embodiment of the present invention.

Description of Embodiments

[Embodiment 1]

An embodiment of the present invention is described below with reference to Figs. 1 through 14. It should be noted that the present invention is not limited to this.
The present embodiment describes a touch-panel-integrated liquid crystal display device having an area sensor function (specifically, a touch panel function).
First, the configuration of a touch-panel-integrated liquid crystal display device of the present embodiment is described with reference to Fig. 2. A touch-panel-integrated liquid crystal display device 100 shown in Fig. 2 (also simply called "liquid crystal display device 100") has a touch panel function of detecting the position of an input through detection of an image on a surface of a display panel by a light sensor element provided in each pixel.
As shown in Fig. 2, the touch-panel-integrated liquid crystal display device 100 of the present embodiment includes: a liquid crystal panel 20; and a backlight 10, provided toward a back surface of the liquid crystal panel 20, which irradiates the liquid crystal panel with light.

The liquid crystal panel 20 includes: an active matrix substrate 21 having a large number of pixels arrayed in a matrix pattern; a counter substrate 22 disposed opposite the active matrix substrate 21; and a liquid crystal layer 23, sandwiched between the two substrates, which serves as a display medium. It should be noted that in the present embodiment, the liquid crystal panel 20 is not limited to any particular display mode and can adopt any display mode such as the TN mode, the IPS mode, the VA mode, etc.

Further, on outer sides of the liquid crystal panel 20, there are provided a front-side polarizing plate 40a and a back-side polarizing plate 40b, respectively, with the liquid crystal panel 20 sandwiched therebetween.

Each of the polarizing plates 40a and 40b plays a role as a polarizer. For example, in cases where a liquid material sealed in the liquid crystal layer is of a vertical alignment type, a normally black mode liquid crystal display device can be achieved by disposing the front-side polarizing plate 40a and the back-side polarizing plate 40b so that their respective directions of polarization are in a crossed Nicols relationship with each other.

The active matrix substrate 21 is provided with TFTs (not illustrated) serving as switching elements for driving the pixels, an alignment film (not illustrated), visible light sensors 31A (area sensor section), infrared light sensors 31 B (area sensor section), a light intensity sensor 50, etc. The visible light sensors 31A, the infrared light sensors 31B, and the light intensity sensor 50 are configured to contain light sensor elements 30 provided in their respective pixel regions.

Further, the counter substrate 22 is provided, albeit not illustrated, with a color filter layer, a counter electrode, an alignment film, etc. The color filter layer is constituted by a coloring section having red (R), green (G), and blue (B) and a black matrix.

As mentioned above, the touch-panel-integrated liquid crystal display device 100 of the present embodiment has light sensor elements 30 provided in their respective pixel regions, whereby the visible light sensors 31A and the infrared light sensors 31B are formed. By the visible light sensors 31A and the infrared light sensors 31B separately detecting an image on the panel surface, an area sensor is achieved which detects the position of an input from an outside source. Moreover, it is possible to, when a finger or input pen makes contact with a specific position on the surface (detector surface 100a) of the liquid crystal panel 20, have the light sensor elements 30 read that position, to input information into the device, and to execute an intended operation. Thus, in the touch-panel-integrated liquid crystal display device 100 of the present embodiment, the touch panel function can be achieved by the light sensor elements 30.

Each of the light sensor elements 30 is formed by a photodiode or a phototransistor and detects the amount of received light by passing therethrough a current corresponding to the intensity of the received light. The TFTs and the light sensor elements 30 may be those formed monolithically by substantially the same process on the active matrix substrate 21. That is, some of the components of each of the light sensor elements 30 may be formed at the same time as some of the components of each of the TFTs. Such a method for forming light sensor elements can be carried out according to a conventionally publicly known method for manufacturing a liquid crystal display device having light sensor elements built-in.

The light intensity sensor (light intensity sensor section) 50 serves to measure the intensity of an environment where the liquid crystal display device 100 is placed. In the present embodiment, the light intensity sensor 50 is constituted by light sensor elements 30 identical in configuration to those light sensor elements 30 constituting the area sensor. That is, those light sensor elements constituting the light intensity sensor 50 and those constituting the area sensor are those formed by the same design and process (manufacturing process) on the active matrix substrate 21. The configuration of the light intensity sensor 50 will be specifically described later.

The term "light intensity" here means the integrated radiant intensity of light that is emitted per unit area or a beam of light that is received per unit area (the latter being also referred to as "illuminance"). Therefore, the light intensity sensor is a sensor that detects either the integrated radiant intensity of light that is emitted per unit area or illuminance. Moreover, the term "infrared light intensity" means the integrated radiant intensity of light (e.g., at $\lambda$=800 to 1,000 nm) that is emitted per unit area.

The backlight 10 serves to irradiate the liquid crystal panel 20 with light but, in the present embodiment, the backlight 10 irradiates the liquid crystal panel 20 with infrared light in addition to white light. Such a backlight that emits light containing infrared light can be achieved by a publicly known method.

Further, although not shown in Fig. 2, there may be provided a front-side phase plate and a back-side phase plate as optical compensation elements on an outer side of the active matrix substrates 21 and an outer side of the counter substrate 22, respectively, in the liquid crystal display device of the present invention.

Further, Fig. 2 shows a liquid crystal driving circuit 60 that drives the liquid crystal panel 20 to carry out a display and a sensor control section 70 for driving the area sensor and the light intensity sensor 50. Fig. 2 also shows internal components of the sensor control section 70. It should be noted that the configuration of the liquid crystal driving circuit of the present embodiment thus applied may be that which have conventionally been publicly known.

As shown in Fig. 2, the sensor control section 70 includes a timing generating circuit 71, a sensor driving circuit (driving circuit) 72, an area sensor readout circuit 73, a coordinate extraction circuit 74, an interface circuit 75, a light intensity sensor readout circuit 76, and a light intensity measuring section 77. It should be noted that although Fig. 2 shows two sensor driving circuits 72 for illustrative purposes, the sensor control section 70 has just one sensor driving circuit 72 provided therein.

The timing generating circuit 71 generates timing signals for controlling the circuits so that they operate in synchronization with each other.

The area sensor driving circuit 72 supplies a power source for driving those light sensor elements 30 constituting the area sensor and those constituting the light intensity sensor 50.

The area sensor readout circuit 73 receives received-light signals from the light sensor elements 30 that pass therethrough currents of different values depending on the amount of received light, and calculates the amount of received light from the value of a current thus obtained.

The coordinate extraction circuit 74 calculates, in accordance with the amount of light received by the light sensor elements 30 as calculated by the area sensor readout circuit 73, the coordinates of a finger touching the surface (detector surface 100a) of the liquid crystal panel.

The interface circuit 75 outputs information on the coordinates of the finger as calculated by the coordinate extraction circuit 74 (position information) to the outside of the liquid crystal display device 100. The liquid crystal display device 100 is connected to a PC or the like through the interface circuit 75.

The light intensity sensor readout circuit 76 receives received-light signals from the light sensor elements 30 contained in the light intensity sensor 50, and calculates the amount of received light from the value of a current thus obtained.

The light intensity measuring section 77 calculates the light intensity of an environment where the device is placed (specifically the intensity, illuminance (brightness), etc. of infrared rays) in accordance with the amount of light received by the light sensor elements 30 as calculated by the light intensity sensor readout circuit 76. Based on the intensity of environmental light thus obtained, the coordinate extraction circuit 74 decides whether it extracts received-light signals from the light sensor elements 30 contained in the visible light sensors 31A or from those contained in the infrared light sensors 31B, thereby making it possible to separately use the visible light sensors 31A and the infrared light sensors 31B properly for different ambient environmental light intensities.

By having such a configuration, the liquid crystal display device 100 allows the light sensor elements 30 formed in the liquid crystal panel 20 to detect the position of an input by capturing as an image a finger or input pen touching the surface (detector surface 100a) of the device.

In the following, the configurations of the sensors (the visible light sensors 31A, the infrared light sensors 31B, and the light intensity sensor 50) provided in the liquid crystal panel 20 are described. In the following description, the visible light sensors 31A are referred to as "sensors A", and the infrared light sensors 31B are referred to as "sensors B".

Fig. 1 schematically shows the configuration of each sensor in a display region (active area) 20a of the liquid crystal panel 20. Although Fig. 1 does not specifically show an internal configuration of the liquid crystal panel 20, the liquid crystal panel 20 has a plurality of data signal lines and a plurality of gate signal lines disposed therein in such a way as to intersect with each other, and has pixel electrodes disposed near the intersections with TFTs interposed therebetween. Further, the color filter layer provided to the counter substrate 22 in the liquid crystal panel 20 has a red (R), green (G), and blue (B) coloring section, formed in a position facing the pixel electrodes, which makes the pixel electrodes red, green, and blue. Each pixel is constituted by three pixel electrodes, namely an R pixel electrode, a G pixel electrode, and a B pixel electrode. In this way, the liquid crystal panel 20 has a plurality of pixels disposed therein in rows and columns in a matrix pattern.

In the liquid crystal panel 20 of the present embodiment, as shown in Fig. 1, those light sensor elements 30 provided in those pixels disposed in an outermost peripheral region within the display region 20a are used as the light intensity sensor 50.

Further, those pixels in a region other than the outermost peripheral region within the display region 20a are also provided with light sensor elements 30, and each of these light sensor elements constitutes either a sensor A or a sensor B. As shown in Fig. 1, the sensors A and B are disposed in rows and columns in a matrix pattern in keeping with the array of pixels. Furthermore, in the present embodiment, the sensors A and B are disposed alternately in a checkered pattern.

Fig. 3 shows the configuration of each of the sensors A in detail. Further, Fig. 4 shows the configuration of each of the sensors B in detail. As shown in these drawings, each unit of sensor A contains a total of sixteen pixels, i.e., four pixels by four pixels, so does each unit of sensor B. It should be noted that, as mentioned above, each pixel is constituted by three pixel electrodes, namely an R pixel electrode, a G pixel electrode, and a B pixel electrode.

As shown in Fig. 3, the sensor A contains a plurality of light sensor elements 30 categorized into two types of light sensor elements, namely light sensor elements 30a that detects the intensity of received visible light and dark-current-compensating light sensor elements 30c for making temperature compensation for the light sensor elements 30a.

Further, as shown in Fig. 4, the sensor B contains a plurality of light sensor elements 30 categorized into two types of light sensor elements, namely light sensor elements 30b that detects the intensity of received infrared light and dark-current-compensating light sensor elements 30c for making temperature compensation for the light sensor elements 30b.

The term "dark-current-compensating light sensor element 30c" here means a compensating sensor, provided to compensate for the detection characteristic of a light sensor that varies according to external factors such as temperature, which serves to improve the precision of the sensor. The dark-current-compensating light sensor elements 30c can be formed by using a conventional publicly known technique. The light sensor elements 30c contained in the sensor A and those contained in the sensor B have identical structures.

(a) through (c) of Fig. 5 show a cross-sectional configuration of such a light sensor element 30a, a cross-sectional configuration of such a light sensor element 30b, and a cross-sectional configuration of such a light sensor element 30c, respectively. That is, (a) through (c) of Fig. 5 show a cross-sectional configuration of the visible light sensor 31A as taken along line X-X' in Fig. 3, a cross-sectional configuration of the infrared light sensor 31B as taken along line Y-Y' in Fig. 4, and a cross-sectional configuration of the visible light sensor 31A or of the infrared light sensor 31B as taken along line Z-Z', respectively.

The light sensor element 30a shown in (a) of Fig. 5 has a light sensor element 30 formed on the active matrix substrate 21. The configuration of the light sensor element 30a to detect the intensity of visible light may be identical to that of a light sensor element provided in a conventional touch-panel-integrated liquid crystal display device.

As with the light sensor element 30a, the light sensor element 30b shown in (b) of Fig. 5 has a light sensor element 30 formed on the active matrix substrate 21. Moreover, the light sensor element 30b is provided with an optical filter 25 for blocking visible light, and the optical filter 25 is located in a position corresponding to a region in the light sensor element 30b where the light sensor element 30 is disposed, in such a way as to face the counter substrate 22. The optical filter 25 has a laminated structure of red and blue color filters 25R and 25B constituting the coloring section of the color filter layer. This makes it possible to block a visible light component of those components of light incident on the light sensor element 30.

In the present embodiment, as shown in (a) of Fig. 5, the light sensor element 30a is provided with an optical filter 25 located on a region in the counter substrate 22 where the light sensor element 30a is disposed, and the optical filter 25 is identical in structure to that provided on the light sensor element 30b. Provided directly above the light sensor element 30b is an opening 25c through which light (light at all wavelengths) is transmitted. Such provision of the sensor A with an optical filter 25 makes it possible to prevent the occurrence of a difference in appearance of a display between a pixel having the sensor A and a pixel having the sensor B.

It should be noted here that it is preferable that if d 1 is the distance between the optical sensor element 30 and the optical filter 25 along the direction of lamination of each layer on the substrate, the distance d2 between an edge of the optical sensor element 30 and an edge of the optical filter (edge of the opening 25c) along a surface of the substrate take on a value greater than or equal to:

$$d2 = d1 + \alpha,$$

where $\alpha$ is a value (distance) obtained by adding a lamination tolerance between the active matrix substrate 21 and the counter substrate 22 to a finished dimensional tolerance between the light sensor element 30 and the optical filter 25. This makes it possible to surely prevent the light sensor element 30 and the optical filter 25 from being overlapped with each other in the sensor A as seen from the panel surface.

As with the light sensor element 30a, the light sensor element 30c shown in (c) of Fig. 5 has a light sensor element 30 formed on the active matrix substrate 21. However, the light sensor element 30c is configured differently from the light sensor element 30a, i.e., is provided with a black matrix 27 for blocking light, and the black matrix 27 is located in a position corresponding to a region in the light sensor element 30c where the light sensor element 30 is disposed, in such a way as to face the counter substrate 22. This allows a current induced by the intensity of light to be eliminated from an induced current that is obtained from the light sensor element 30c, thus making it possible to detect a current induced by a factor other than the intensity of light (e.g., temperature). Moreover, the light sensor elements 30a and 30b can be corrected by subtracting a value detected by the light sensor element 30c from values detected by the light sensor elements 30a and 30b, respectively.

In the liquid crystal panel 20 of the present embodiment, as described above, the two types of sensor, namely the sensors A and B, are achieved by providing or not providing an optical filter 25 on each of the light sensor elements 30 identical in configuration to conventional ones (i.e., by providing or not providing an opening 25c in the optical filter 25 formed on the light sensor element 30). This point is discussed with reference to Figs. 6 and 7.

Fig. 6 shows an example where a liquid crystal panel of the present embodiment is achieved by a combination of a liquid crystal panel 20c provided with sensors A and an optical filter structure 26. A graph shown in an upper right portion of Fig. 6 shows the spectral sensitivity (sensor output as a function of wavelength) of each of the sensors A, and a graph shown in a right middle portion of Fig. 6 shows the spectral transmittance (light transmittance as a function of wavelength) of each visible light blocking section 26a provided in the optical filter structure 26.

The liquid crystal panel 20c is configured such that the sensors A (visible light sensors) are disposed in rows and columns in a matrix pattern. It should be noted that each of the sensors A has a certain level of sensitivity at all wavelengths from visible light to infrared light as shown in the upper right graph.

Further, the optical filter structure 26 shown in Fig. 6 is configured to have its visible light blocking sections 26a and visible light transmitting sections 26b disposed alternately in a checkered pattern.

The graph shown in the right middle portion of Fig. 6 shows the spectral transmittance in each of the visible light blocking sections 26a of the optical filter structure 26. As shown in this graph, the visible light blocking section 26a blocks visible light (i.e., light having a wavelength of 780 nm or shorter). The visible light blocking section 26a can be made of any material that has such properties as to block visible light (i.e., light having a wavelength of 780 nm or shorter) and transmit infrared light.

Specific examples of the structure of the visible light blocking section 26a include a laminate of a red color filter and a blue color filter as in the case of the optical filter 25 described above. Visible light can be surely blocked by combining red and blue color filers. Further, in addition to this, the optical filter 25 has such an advantage that the optical filter structure 26 can be incorporated into the color filter layer provided in the counter substrate 22 of the liquid crystal panel 20.

Each of the visible light transmitting sections 26b of the optical filter 26 has openings formed in positions corresponding to light-receiving sections of the light sensor elements 30a of a sensor A corresponding to that visible light transmitting section 26b. This allows the light-receiving sections of the light sensor elements 30a to receive light at all wavelengths. It should be noted that a region in the visible light transmitting section 26b other than the openings is formed by an RB filter (optical filter obtained by joining an R color filter and a B color filter on top of each other).

Fig. 14 schematically shows a structure where sensors A having optical filters 25 provided with openings 25c and sensors B having optical filters 25 provided with no openings are disposed alternately.

By inserting the optical filter structure 26 into the liquid crystal panel 20c, a liquid crystal panel 20 is obtained which has its sensors A and B disposed alternately in a checkered pattern as shown in Fig. 6. (a) of Fig. 7 shows the spectral sensitivity of the sensors A of the liquid crystal panel 20 shown in Fig. 6, and (b) of Fig. 7 shows the spectral sensitivity of the sensors B of the liquid crystal panel 20 shown in Fig. 6.

As shown in (a) of Fig. 7, the sensors A respond to visible and infrared ranges of wavelengths and therefore are found to be able to detect the intensity of light containing both visible light and infrared light. Further, as shown in (b) of Fig. 7, the sensors B respond only to an infrared range of wavelengths and therefore are found to be able to detect the intensity of infrared light.

The liquid crystal panel 20 thus configured allows the two types of light sensors, namely the sensors A and B, to separately detect an image on the panel surface. That is, the liquid crystal panel 20 can detect an input position by two types of method, i.e., can detect an input position by using the touch panel function fulfilled by the sensors A and detect the input position by using the touch panel function fulfilled by the sensors B.

In the following, the light intensity sensor 50, which is a third type of sensor provided in the liquid crystal panel 20, is described.

As shown in Fig. 1, the liquid crystal panel 20 of the present embodiment has the light intensity sensor 50 disposed in the outermost peripheral region of its display region. That is, the light intensity sensor 50 is constituted by those light sensor elements 30 formed in outermost peripheral ones of the pixels disposed in rows and columns in a matrix pattern within the display region. Moreover, the light intensity sensor 50 is disposed in such a way as to surround the sensors A and B disposed in a matrix pattern.

Thus, in the present embodiment, the light intensity sensor 50 is constituted by the plurality of light sensor elements 30 disposed in the outermost peripheral region of the display region, and an average of the amounts of light received by those light intensity measuring light sensor elements 30d constituting the light intensity sensor 50 is taken to be calculated as the intensity of environmental light.

Further, those light sensor elements 30d constituting the intensity light sensor section 50 of the present embodiment is lower in light sensitivity than those light sensor elements 30a constituting the visible light sensors 31A provided in the display region by a predetermined percentage. That is, the light sensitivity of those light sensor elements 30d constituting the intensity light sensor section 50 of the present embodiment is $1/n$ (where n is any number that is greater than 1) of the light sensitivity of those light sensor elements 30a constituting the visible light sensors 31A provided in the display region (or the light sensitivity of those light sensor elements 30a constituting the infrared light sensors 31B). This allows the light intensity sensor 50 to be lower in output than the visible light sensors 31A and have its sensor output saturated at an illuminance higher than the illuminance at which the visible light sensors 31A have their output saturated. This makes it possible to accurately measure a wide range of environmental illuminances without having a sensor output saturated in a range of illuminances to be measured (see Fig. 10).

Fig. 8 shows the configuration of the light intensity sensor in more detail. In Fig. 8, the configuration of that part of the light intensity sensor 50 surrounded by a dotted line in Fig. 1 is shown in more detail. As shown in Fig. 8, the part indicated by the dotted line in Fig. 1 contains a total of sixteen pixels, i.e., four pixels by four pixels.

It should be noted that, as mentioned above, each pixel is constituted by three pixel electrodes, namely an R pixel electrode, a G pixel electrode, and a B pixel electrode.

As shown in Fig. 8, the light intensity sensor 50 contains a plurality of light sensor elements 30 categorized into two types of light sensor elements, namely light sensor elements 30d that detect the intensity of received light and dark-current-compensating light sensor elements 30c for making temperature compensation for the light sensor elements 30d. The dark-current-compensating light sensor elements 30c and those contained in the sensors A and B have identical structures.

Further, as shown in Fig. 8, the present embodiment has an optical filter 25 provided on those light sensor elements 30 constituting the light intensity sensor 50. That is, the light intensity sensor 50 is identical in configuration to the infrared light sensor 31B (sensor B), except for the configuration for making its light sensitivity lower by a predetermined percentage.

This configuration allows the light intensity sensor 50 to detect the intensity of infrared light (intensity of infrared light contained in light emitted from an outside source). The light sensor 50 is identical in basic configuration to the infrared light sensor 31B shown in Fig. 4 and (b) of Fig. 5. However, the light intensity sensor 50 is lower in light sensitivity than the infrared light sensor 31B by a predetermined percentage.

The foregoing configuration makes it possible to carry out area sensor switching according to the intensity of infrared light in an environment where the liquid crystal display device 100 is placed.

It should be noted that, in the present invention, the light intensity sensor 50 is not limited to such a configuration. Another example of the light intensity sensor 50 may be a sensor that detects the intensity of visible light (i.e., an illuminance sensor).

In this case, the light intensity sensor is identical in basic configuration to the visible light sensor 31A shown in Fig. 3 and (a) of Fig. 5. However, the light intensity sensor A is lower in light sensitivity than the visible light sensor 31A by a predetermined percentage.

The foregoing configuration makes it possible to carry out area sensor switching according to the intensity of illuminance in an environment where the liquid crystal display device 100 is placed.

(a) through (d) of Fig. 9 show example configurations of light sensor elements constituting such a light intensity sensor 50. As shown in (a) through (d) of Fig. 9, each of the light sensor elements 30d is connected to the drain electrode of a TFT 63 provided in each pixel located in the outermost peripheral region within the display region. It should be noted that (a) through (d) of Fig. 9 also show a gate signal line 61 and a data signal line 62 connected to such a TFT 63.

The light intensity sensor 50 shown in (a) of Fig. 9 is configured such that only one of the $n_1$ (where $n_1$ is

an integer of 2 or greater) light sensor elements 30d receives outside light. For that purpose, as shown in (a) of Fig. 9, the light intensity sensor 50 has a light blocking member 51 provided on ($n_1$-1) ones of the $n_1$ light sensor elements 30d, and the light blocking member 51 has an opening 51 a formed in a part thereof which is on the $n_2$ th light sensor element 30d.

Thus, the aperture ratio of those light sensor elements 30d constituting the intensity light sensor 50 as seen from the panel surface 100a is smaller by a predetermined percentage than (specifically, is $1/n_1$ of) the aperture ratio of those light sensor elements 30a constituting the visible light sensor 31A as seen from the panel surface 100a. The term "aperture ratio of light sensor elements as seen from the panel surface" here means the percentage of an area not shielded from light to the area of the whole light-receiving surface of the light sensor elements, with the light sensor elements seen from the panel surface. It should be noted that when the light intensity sensor 50 is an infrared light sensor, the aperture ratio of light sensor elements as seen from the panel surface means the percentage of an area not shielded from infrared light to the area of the whole light-receiving surface of the light sensor elements, with the light sensor elements seen from the panel surface.

Such a configuration allows the plurality of light sensor elements 30d constituting the light intensity sensor 50 as a whole to receive $1/n_1$ of the amount of light that would be received if no such light blocking member were provided. This allows the light sensitivity of the light intensity sensor 50 to be $1/n_1$ of that of the visible light sensors 31A (or of the infrared light sensors 31B).

It should be noted that the light blocking member 51 can appropriately be made of an material that does not transmit light. Specific examples of the material of which the light blocking member 51 is made include a metal material, a black resin, and the like. For example, the light blocking member 51 can be formed by using a carbon black constituting the color filter layer formed in the counter substrate 22. In this case, it is only necessary, at the step of forming the color filter layer, to pattern a carbon black so that it is located in a region corresponding to a predetermined number of light sensor elements 30d out of those light sensor elements 30d constituting the light intensity sensor 50. Further, in order to be able to block light at all wavelengths, the light blocking member is preferably made of a metal material. It should be noted that when the light intensity sensor 50 is an infrared light sensor, the light blocking member is preferably able to completely block infrared light.

The light intensity sensor 50 shown in (b) of Fig. 9 is configured such that only one of the $n_2$ (where $n_2$ is an integer of 2 or greater) light sensor elements 30d is connected to the sensor driving circuit 72 through a wire through which that light sensor element is driven (i.e., a data signal line 62). That is, in each of the ($n_2$-1) light sensor elements 30, as indicated by A in (b) of Fig. 9, the TFT 63 has it source electrode disconnected from the data signal line. A light sensor element 30d not connected to the sensor driving circuit 72 does not function as a light intensity sensor; therefore, in the foregoing configuration, only one of the $n_2$ elements functions as a light intensity sensor.

Such a configuration allows the plurality of light sensor elements 30d constituting the light intensity sensor 50 as a whole to receive $1/n_2$ of the amount of light that would be detected if all the light sensor elements 30d were connected to the data signal line 62. This allows the light sensitivity of the light intensity sensor 50 to be $1/n_2$ of that of the visible light sensors 31A (or of the infrared light sensors 31B).

Another possible example of a configuration where the light sensitivity of the light intensity sensor is $1/n_2$ is a configuration where the number of light sensor elements 30d constituting the light intensity sensor 50 is reduced (i.e., where no light sensor elements are formed which are not connected to the driving circuit). However, in such a case where no light sensor elements are formed which are not connected to the driving circuit, it is necessary, at all the steps in the process of manufacture of light sensor elements, to use different masks for a pixel region where light sensor elements are formed and a pixel region where no light sensor elements are formed. On the other hand, the configuration where some light sensor elements are not connected to the driving circuit can be achieved simply by using a different mask for wiring. This advantageously brings about a reduction in cost of design change.

The light intensity sensor 50 shown in (c) of Fig. 9 is configured to have a dark filter 54, provided on each of those light sensor elements 30d constituting the light intensity sensor 50, which reduce the amount of transmitted light (amount of light that enters through the panel surface 100a) to $1/n$ (where $n$ is any number that is greater than 1). Such a configuration allows each of those light sensor elements 30d constituting the light intensity sensor 50 to receive $1/n$ of the amount of light that would be received if no such dark filter 54 were provided. This allows the light sensitivity of the light intensity sensor 50 to be $1/n$ of that of the visible light sensors 31A (or of the infrared light sensors 31B).

Such a dark filter 54 can be achieved by a wideband ND filter. An ND filter is a filter that uniformly lowers spectral transmittance, and is available as an absorption type, a reflection type, a complex type, etc.

The light intensity sensor 50 shown in (d) of Fig. 9 is configured to have a light blocking member 55 provided on each of those light sensor elements 30d constituting the light intensity sensor 50. The light blocking member 55 is provided with an opening 55a having an area of $1/n$ (where $n$ is any number that is greater than 1) of that of the light-receiving section of the light sensor element 30d. Such a configuration allows each of those light sensor elements 30d constituting the light intensity sensor 50 to receive $1/n$ of the amount of light that would be received if no such light blocking member 55 were provided. This allows the light sensitivity of the light intensity sensor 50 to be $1/n$ of that of the visible light sensors 31A. It should be noted that the light blocking member 55 can appropriately be made of an material that does not transmit light. Further, the light blocking member can be made of the same material as the light blocking member 51.

As described above, the present embodiment uses, as light sensor elements for use in a light intensity sensor, light sensor elements having their sensitivity reduced by a predetermined percentage relative to those light sensor elements constituting an area sensor. Fig. 10 shows examples of the sensor output characteristics of those light sensor elements 30a constituting the visible light sensors 31A and those light sensor elements 30d constituting the light intensity sensor 50 with respect to the ambient illuminance. For example, when the liquid crystal display device is used in an environment where the ambient illuminance reaches a maximum of 100,000 lux, the range of illuminances to be measured is 0 to 100,000 lux as shown in Fig. 10. Then, the sensor output characteristic of those light sensor elements 30a constituting the visible light sensors 31A is saturated at an illuminance A of Fig. 10, which is darker than 100,000 lux, as shown in Fig. 10. On the other hand, the sensor output characteristic of those light sensor elements 30d, used for the light intensity sensor 50, which are lower in light sensitivity than the light sensor elements 30a by a predetermined percentage is saturated at an illuminance B of Fig. 10, which is brighter than 100,000 lux. For this reason, the light intensity sensor 50, in which the light sensor elements 30d are used, can accurately measure environmental illuminance in a range of illuminances of 0 to 100,000 lux.

In the present embodiment, moreover, as for the structure of each light sensor element per se (i.e., the structures of a photodiode, a phototransistor, etc. constituting the light sensor element), except for reducing light sensitivity by using a light blocking member or the like, those light sensor elements (e.g., the light sensor elements 30a, 30b, etc.) for use in the area sensor and those light sensor elements 30 for use in the light intensity sensor have identical structures. That is, those light sensor elements 30 constituting the light intensity sensor 50 and those constituting the area sensor are those formed by the same design and process (manufacturing process) on the active matrix substrate 21.

This makes it possible to match the sensor characteristics of the light intensity sensor and of the area sensor (visible light sensors and infrared light sensors). This makes it possible to accurately estimate an output of the area sensor in response to environmental light. Further, since the number of components can be made smaller than in the case of provision of an external light intensity sensor, the device can be made smaller, thinner, and lighter, and can also be manufactured at a lower cost.

The foregoing configuration makes it possible to accurately measure a wide range of environmental illuminances by reducing the sensitivity of those light sensor elements for use in the light intensity sensor by a predetermined percentage. Further, since the light intensity sensor can be made equal in sensor characteristic to those light sensor elements for use as the area sensor within the display region, the intensity of environmental light as obtained by the light intensity sensor can be accurately reflected in those light sensor elements for use in the area sensor.

Meanwhile, in the case of provision of a light intensity sensor only in a portion (dot region) of the display region, there is a possibility that if the palm of a hand whose finger is in touch with the panel surface is put over the light intensity sensor, the light intensity sensor may detect a light intensity that is lower than the actual value of environmental light intensity. However, if a light intensity sensor is provided in the outermost peripheral region of the display region, the percentage of light blocked by the palm of a hand or the like from being received by the light intensity sensor is smaller than in the case of provision of a light intensity sensor only in a portion of the display region; therefore, a more accurate environmental illuminance can be obtained. Further, whereas a light intensity sensor disposed within the display region causes a portion corresponding to the light intensity sensor to appear as a black dot in a display image, a light intensity sensor disposed at the outermost periphery of the display region as described above makes an illuminance sensor that does not affect a displayed image.

The following describes a method for the liquid crystal display device 100 of the present embodiment to detect an input position.

The liquid crystal display device 100 of the present embodiment switches between carrying out position detection by using the visible light sensors 31A (sensors A) and carrying out position detection by using the infrared light sensors 31B (sensors B) in accordance with the illuminance detected by the light intensity sensor 50. This sensor switching can be determined by focusing attention on which of the two types of sensors can be used to carry out more accurate position detection in a specific range of illuminances.

The following describes a range of illuminances for which the sensors A are suited (range of illuminances in which the sensors A can carry out accurate position detection), a range of illuminances for which the sensors A are not suited (range of illuminances in which some errors may be observed in position detection), a range of illuminances for which the sensors B are suited (range of illuminances in which the sensors B can carry out accurate position detection), and a range of illuminances for which the sensors B are not suited (range of illuminances in which some errors may be observed in position detection).

(a) of Fig. 11 shows how a touched part of the panel surface is recognized by the area sensor control section 70 when the sensors A are used, and (b) of Fig. 11 shows how a touched part of the panel surface is recognized by the sensor control section 70 when the sensors B are used.

When the sensors A are used, as shown in (a) of Fig. 11, a part T1 touched with a finger or the like appears as a darker image than the other part. This is because blockage of outside light in the touched part causes the amount of light received by the light sensor elements 30a in the touched part to be smaller than that received by those light sensor elements 30a in the other region. On the other hand, when the sensors B are used, as shown in (b) of Fig. 11, a touched part T2 appears as a brighter image than the other part. This is because the backlight 10 of the liquid crystal display device 100 emits light containing infrared light and, in the touched part, the infrared light is reflected by a finger or the like touching the panel surface but, in the untouched part, the infrared light travels out of the liquid crystal panel (see Fig. 2).

Moreover, since the sensors A have such characteristics, the sensors A can suitably carry out position detection in a range of illuminances from 10,000 lux (1x) to 100,000 lux (1x), which are comparatively bright, as shown in (a) of Fig. 12. This is because in a dark environment it is difficult to distinguish between touched and untouched parts by means of visible light. Moreover, if the liquid crystal panel 20 in particular is carrying out a bright image display such as a white display, and if a finger or the like is touching that bright image display region, the touched part is also recognized by the sensors A as a bright image. This makes misrecognition likely to occur.

On the other hand, since the sensors B have such characteristics, the sensors B can suitably carry out position detection in a range of illuminances shown in (b) of Fig. 12. As shown in (b) of Fig. 11, when the outside light is light emitted by a fluorescent lamp, the sensors B can carry out satisfactory position detection in all ranges of illuminances (specifically from 0 to 100,000 lux (1x)). This is because since the fluorescent light does not contain infrared light, the sensors B can carry out position detection without being affected by an environmental light intensity. Alternatively, when the outside light is sunlight, the sensors B can carry out satisfactory position detection in a range of illuminances from 0 to 10,000 lux (1x), which are comparatively dark. This is because the sunlight contains infrared light and, when the sunlight is strong, the intensity of infrared light becomes so high that the infrared light is detected by those light sensor elements 30b in the untouched part.

When the range of light intensities in which the sensors B can suitably carry out position detection is expressed as the intensity of infrared light, the sensors B can carry out satisfactory position detection if the intensity of infrared light in an environment where the liquid crystal display device 100 is placed is less than or equal to a value falling within a range of 1.00 to 1.80 $mW/cm^2$. The intensity of infrared light here means the integrated radiant intensity of light at wavelengths of 800 to 1,000 nm.

Accordingly, the liquid crystal display device 100 of the present embodiment divides the target range of illuminances into a range of illuminances for the sensors A and a range of illuminances for the sensors B as shown in (c) of Fig. 12, for example, and can switch between using the sensors A and using the sensors B, depending on within which of the target ranges of illuminances an environmental illuminance detected by the light intensity sensor 50 falls. In the example shown in (c) of Fig. 12, the sensors B carry out position detection if the illuminance falls within a range of not less than 0 lux (1x) to less than 10,000 lux (lx), and the sensors A carry out position detection if the illuminance falls within a range of not less than 10,000 lux (1x) to not greater than 100,000 lux (lx).

Alternatively, the liquid crystal display device 100 of the present embodiment can switch between using the sensors A and using the sensors B depending on whether or not the intensity of infrared light in an environment where the liquid crystal display device 100 is placed is greater than or equal to a predetermined value. It should be noted here that it is preferable that the predetermined value fall within a range of 1.00 to 1.80 $mW/cm^2$.

For such sensor switching, the area sensor control section 70 shown in Fig. 2 carries out a process as described below.

First, the light intensity sensor readout circuit 76 and the light intensity measuring section 77 calculates environmental light intensity on the basis of information detected by the light intensity sensor 50. At the same time, the area sensor readout circuit 73 reads position information detected by the sensors A and B. The position information obtained by the area sensor readout circuit 73 from the sensors A and B is sent to the coordinate extraction circuit 74 (sensor switching section).

The coordinate extraction circuit 74 determines, in accordance with the information on environmental light intensity transmitted from the light intensity measuring section 77, whether the position information detected by the sensors A or that detected by the sensors B is used to carry out position detection. The following describes a case where area sensor switching is carried out by using the light intensity sensors 50 that detect illuminance and a case where area sensor switching is carried out by using the light intensity sensors 50 that detect the intensity of infrared light.

(1) Case Where Area Sensor Switching Is Carried Out by Using the Light Intensity Sensors 50 That Detect Illuminance

In accordance with the information on environmental illuminance (environmental light intensity) transmitted from the light intensity measuring section 77, the coordinate extraction circuit 74 recognizes, as an input position, a region (T1) obtained in black within a white region as shown in (a) of Fig. 11, if the environmental illuminance transmitted is greater than or equal to 10,000 lux, for example. On the other hand, if the environmental illuminance transmitted from the light intensity measuring section 77 is less than 10,000 lux, for example, the coordinate extraction circuit 74 recognizes, as an input position, a region (T2) indicated in white within a dark region as shown in (b) of Fig. 11.

In this way, the coordinate extraction circuit 74 uses different input position detection methods depending on whether or not the environmental illuminance is greater than or equal to a threshold value (e.g., 10,000 lux). If the environmental light intensity is greater than or equal to the threshold value, the coordinate extraction circuit 74 detects an input position by using the information obtained by the sensors A as position information; if the environmental illuminance is less than the threshold value, the coordinate extraction circuit 74. detects an input position by using the information obtained by the sensors B as position information.

(2) Case Where Area Sensor Switching Is Carried Out by Using the Light Intensity Sensors 50 That Detect the Intensity of Infrared Light

In accordance with the information on infrared light intensity (environmental light intensity) transmitted from the light intensity measuring section 77, the coordinate extraction circuit 74 recognizes, as an input position, a region (T1) obtained in black within a white region as shown in (a) of Fig. 11, if the infrared light intensity transmitted is greater than or equal to a predetermined value (e.g., 40 $mW/cm^2$). On the other hand, if the environmental illuminance transmitted from the light intensity measuring section 77 is less a predetermined value (e.g., 40 $mW/cm^2$), the coordinate extraction circuit 74 recognizes, as an input position, a region (T2) indicated in white within a dark region as shown in (b) of Fig. 11.

In this way, the coordinate extraction circuit 74 uses different input position detection methods depending on whether or not the environmental infrared light intensity is greater than or equal to a threshold value. If the environmental infrared light intensity is greater than or equal to the threshold value, the coordinate extraction circuit 74 detects an input position by using the information obtained by the sensors A as position information; if the environmental infrared light intensity is less than the threshold value, the coordinate extraction circuit 74 detects an input position by using the information obtained by the sensors B as position information.

It should be noted that it is preferable that the predetermined value (threshold value) of infrared light intensity be selected from a range of values of 1.00 to 1.80 $mW/cm^2$.

The position information thus obtained in the coordinate extraction circuit 74 is outputted to the outside through the interface circuit 75.

In the liquid crystal display device 100 of the present embodiment, as described above, the coordinate extraction circuit 74 can change according to environmental light intensities the way an input position is detected. This makes it possible to use one coordinate extraction circuit to carry out position detection through the two types of sensors without providing a coordinate extraction circuit for the sensors A or a coordinate extraction circuit for the sensors B. This in turn makes it possible to achieve a reduction in circuit scale and a decrease in amount of information to be processed.

As described above, the liquid crystal display device 100 of the present embodiment can carry out position detection by using the two types of sensors, namely the sensors A that detect visible light and the sensors B that detect infrared light. This makes it possible to separately use the two types of sensors depending the different ranges of illuminances or ranges of intensities of infrared light for which the two types of sensors are suited respectively. This in turn makes it possible to carry out accurate position detection in a wider range of environmental light intensities than does an area sensor simply using two types of sensors of different light sensitivities.

Furthermore, the liquid crystal display device 100 of the present embodiment switches coordinate extraction methods according to environmental light intensities to extract the coordinates of a touched position in accordance with detected information from either of the two types of sensors and, therefore, can extract coordinates through the two types of sensors with just one coordinate extraction circuit.

The present embodiment has been described above by taking as an example a configuration in which the sensors A and B are disposed alternately in a checkered pattern; however, the present invention is not necessarily limited to such a configuration. The sensors A and B may be disposed randomly. Alternatively, the sensors A and B may be disposed alternately in rows.

However, in order to minimize a decrease in resolution due to the provision of the two types of light sensors, it is preferable, as in the present embodiment, that the sensors A and B be disposed alternately in a checkered pattern.

This point is discussed with reference to (a) and (b) of Fig. 13. (a) of Fig. 13 shows an example having its sensors A and B disposed alternately in a checkered pattern, and (b) of Fig. 13 shows an example having its row of sensors A and rows of sensors B disposed alternately.

Let it be assumed, for example, that the resolution of sensors A alone disposed in rows and columns in a matrix pattern is 60 dpi (dots per inch). Then, when two types of sensors (sensors A and B) are disposed in a checkered pattern as shown in (a) of Fig. 13, the horizontal (x-axis) and vertical (y-axis) resolutions are both $(1/\sqrt{2}) \times 60 \fallingdotseq 42$ dpi.

On the other hand, when two types of sensors (sensors A and B) are disposed alternately in rows as shown in (b) of Fig. 13, the vertical (y-axis) resolution is $1/2 \times 60 = 30$ dpi, whereas the horizontal (x-axis) resolution remains 60 dpi. In this case, the overall resolution ends up being a low vertical resolution. Further, there arises a difference between the vertical and horizontal resolutions.

By thus disposing the sensors A and B in a checkered pattern, a decrease in resolution due to the provision of the two types of light sensors can be minimized in comparison with the resolution of an area sensor constituted by only light sensors of one type, with the total number of light sensors unchanged.

Further, the present embodiment has been described above by taking as an example a configuration in which a light sensor element is provided for each pixel; however, in the present invention, such a light sensor element does not necessarily need to be provided for each pixel. Further, the present invention may be configured such that such a light sensor element is provided for any one of the R, G, and B pixel electrodes constituting a single pixel.

In the present embodiment, the area-sensor-equipped liquid crystal display device has been described by taking as an example one configured to include two types of sensors that detect light in different ranges of wavelengths from each other, namely the visible light sensors each containing light sensor elements that receive visible light and the infrared light sensors each containing light sensor elements that receive infrared light. However, the present invention is not limited to such a configuration. Other example configurations include an area-sensor-equipped liquid crystal display device configured to include two types of sensors of different light sensitivities.

Further, although the present embodiment uses the light intensity sensor to switch the plural types of light sensor elements according to the intensity of environmental light, the applicability of the present invention is not limited to this. Other examples of usage of a light intensity sensor provided in a liquid crystal display device of the present invention include controlling, in accordance with the intensity of ambient environmental light, a period of sensing time (detection time) during which the light sensor elements carry out sensing, controlling the backlight in accordance with the intensity of ambient environmental light, and the like. In Embodiment 2 below, a liquid crystal display device capable of controlling, in accordance with the intensity of ambient environmental light, a period of sensing time (detection time) during which the light sensor elements carry out sensing is described as another example of the present invention.

[Embodiment 2]

Fig. 15 shows the configuration of a touch-panel-integrated liquid crystal display device 200 (also simply called "liquid crystal display device 200") according to a second embodiment of the present embodiment. The liquid crystal display device 200 shown in Fig. 15 has a touch panel function of detecting the position of an input through detection of an image on a surface of a display panel by a light sensor element provided in each pixel. As shown in Fig. 15, the touch-panel-integrated liquid crystal display device 200 of the present embodiment includes: a liquid crystal panel 120; and a backlight 10a, provided toward a back surface of the liquid crystal panel 120, which irradiates the liquid crystal panel with light.

The liquid crystal panel 120 is substantially identical in configuration to the liquid crystal panel 20 of the liquid crystal display device 100 described in Embodiment 1. Therefore, only points of difference between the liquid crystal panels 120 and 20 are discussed here.

Further, although the backlight 10a is different from the backlight 10 of Embodiment 1 in that the backlight 10a emits only white light, the backlight 10a can be configured in a similar manner to a backlight of an ordinary liquid crystal display device.

In Embodiment 1 above, the liquid crystal panel 20 has the visible light sensors 31A and the infrared light sensors 31B formed therein, and by these two types of sensors separately detecting an image on the panel surface, an area sensor is achieved which detects the position of an input from an outside source. On the other hand, the liquid crystal panel 120 of Embodiment 2 has an area sensor section formed solely by visible light sensors 31A. That is, by providing the liquid crystal panel 120 with the plurality of visible light sensors 31A that separately detect an image on the panel surface, it is possible to, when a finger or input pen makes contact with a specific position on the surface (detector surface 200a) of the liquid crystal panel 20, have the light sensor elements 30 read that position, to input information into the device, and to execute an intended operation.

Further, the liquid crystal panel 120 of Embodiment 2 is provided with a light intensity sensor 50 for measuring the illuminance of an environment where the liquid crystal display device 200 is placed. In the present embodiment, too, light sensor elements 30 identical in configuration to those light sensor elements 30 constituting the area sensor are used as light sensor elements to constitute the light intensity sensor 50. Further, in the liquid crystal panel 120, as in Embodiment 1, those light sensor elements 30 provided in those pixels disposed in an outermost peripheral region within the display region 20a are used as the light intensity sensor 50. The light intensity senor 50 is identical in specific configuration to that of Embodiment 1 and, as such, is not described here.

Further, as shown in Fig. 15, the liquid crystal display device 200 is provided with a liquid crystal driving circuit 60 that drives the liquid crystal panel 20 to carry out a display and a sensor control section 70a for driving the area sensor.

As shown in Fig. 15, the sensor control section 70a includes a timing generating circuit 71, a sensor driving circuit 72a, an area sensor readout circuit 73, a coordinate extraction circuit 74, and an interface circuit 75.

The timing generating circuit 71 generates timing signals for controlling the circuits so that they operate in synchronization with each other.

The area sensor driving circuit 72a supplies a power source for driving those light sensor elements 30 constituting the visible light sensors 31A.

The area sensor readout circuit 73 receives received-light signals from the light sensor elements 30 that pass therethrough currents of different values depending on the amount of received light, and calculates the amount of received light from the value of a current thus obtained.

The coordinate extraction circuit 74 calculates, in accordance with the amount of light received by the light sensor elements 30 as calculated by the area sensor readout circuit 73, the coordinates of a finger touching the surface (detector surface 200a) of the liquid crystal panel.

The interface circuit 75 outputs information on the coordinates of the finger as calculated by the coordinate extraction circuits 74 (position information) to the outside of the liquid crystal display device 200. The liquid crystal display device 200 is connected to a PC or the like through the interface circuit 75.

By having such a configuration, the liquid crystal display device 200 allows the light sensor elements 30 disposed in the liquid crystal panel 20 to detect the position of an input by capturing as an image a finger or input pen touching the surface of the device (the detector surface 200a).

Further, the sensor control section 70a includes a light intensity sensor readout circuit 76 and a light intensity measuring section 77 as components involved in control of the illuminance sensor 50. Further, the sensor driving circuit (driving circuit) 72a also functions a circuit for driving those light sensor elements 30d constituting the light intensity sensor 50.

The light intensity sensor readout circuit 76 receives received-light signals from the light sensor elements 30 contained in the light intensity sensor 50, and calculates the amount of received light.

The light intensity measuring section 77 calculates the intensity of light in an environment where the device is placed in accordance with the amount of light received by the light sensor elements 30 as calculated by the light intensity sensor readout circuit 76. The information thus obtained on the intensity of environmental light is sent to the sensor driving circuit 72a.

The liquid crystal display device 200 thus configured controls, in accordance with the intensity of environmental light, a period of sensing time during which those light sensor elements 30a constituting the visible light sensors 31A carry out sensing. Specifically, in accordance with the intensity of environmental light as obtained by the light intensity measuring section 77, the sensor driving circuit 73a controls driving of those light sensor elements 30a constituting the visible light sensors 31A and control a period of sensing time (detection time) during which the light sensor elements 30a carry out sensing. This makes it possible to carry out control to shorten the sensing time of the light sensor elements while the device is in a bright environment and to lengthen the sensing time of the light sensor elements while the device is in a dark environment. In other words, this makes it possible to carry out control to make the sensing time of the light sensor elements in the visible light sensors 31A shorter when the intensity of environmental light as obtained by the light intensity sensor is higher than when it is lower and to make the sensing time of the light sensor elements in the visible light sensors 31A longer when the intensity of environmental light as obtained by the light intensity sensor is lower than when it is higher.

In this way, the liquid crystal display device 200 of the present embodiment achieves more accurate position detection by controlling, in accordance with the intensity of environmental light, a period of sensing time during which those light sensor elements constituting the area sensor carry out sensing.

It should be noted the light intensity sensor 50 provided in the liquid crystal display device 200 of the present embodiment may be a light intensity sensor that detects the intensity of infrared light or a light intensity sensor that detects the illuminance of an environment. When the light intensity sensor 50 is a light intensity sensor that detects the intensity of infrared light, the light intensity sensor 50 can be configured by providing an optical filter 25 on the light sensor elements 30 as described in Embodiment 1. Alternatively, when the light intensity sensor 50 is a light intensity sensor that detects the illuminance of an environment, the light intensity sensor 50 can be configured by providing no optical filter 25 on the light sensor elements 30 or by making openings 25c in the optical filter 25 provided on the light sensor elements 30.

The present invention is not limited to the description of the embodiments above, but may be altered by a skilled person within the scope of the claims. An embodiment based on a proper combination of technical means disclosed in different embodiments is encompassed in the technical scope of the present invention.

Industrial Applicability

Use of a liquid crystal display device of the present invention makes it possible to accurately measure ambient environmental illuminance by using light sensor elements provided in the device. Therefore, the liquid crystal display device of the present invention can be used as a liquid crystal display device that controls a driving circuit provided in the device in accordance with environmental illuminance.

Reference Signs List

10      Backlight

10a     Backlight
20      Liquid crystal panel
21      Active matrix substrate
22      Counter substrate
23      Liquid crystal layer
25      Optical filter
25B     Blue color filter
25R     Red color filter
25c     Opening
26      Optical filter structure
30      Light sensor element
30a     Light sensor element (of a visible light sensor)
30b     Light sensor element (of an infrared light sensor)
30d     Light sensor element (of a light intensity sensor)
31A     Visible light sensor (area sensor section)
31B     Infrared light sensor (area sensor section)
40a     Front-side polarizing plate
40b     Back-side polarizing plate
50      Light intensity sensor (light intensity sensor section)
51      Light blocking member (light blocking section)
54      Dark filter
55      Light blocking member
70      Sensor control section
70a     Sensor control section
100     Touch-panel-integrated liquid crystal display device (liquid crystal display device)
100a    Panel surface (detector surface)
120     Liquid crystal panel
200     Touch-panel-integrated liquid crystal display device (liquid crystal display device)
200a    Panel surface (detector surface)

**Claims**

1.  A liquid crystal display device (i) including a liquid crystal panel having an active matrix substrate, a counter substrate, and a liquid crystal layer disposed therebetween and (ii) having an area sensor function of detecting the position of an input from an outside source by the liquid crystal panel detecting an image on a panel surface, the liquid crystal panel having a plurality of light sensor elements that detect the intensity of received light,
the liquid crystal panel comprising:

    a light intensity sensor section, constituted by those ones of the light sensor elements which are disposed in an outermost peripheral part of a display region of the liquid crystal panel, which detects the intensity of light in an environment where the liquid crystal display device is placed; and

    an area sensor section, constituted by those ones of the light sensor elements other than those constituting the light intensity sensor section, which detects the position of an input from an outside source by the light sensor elements detecting an image on the panel surface, those light sensor elements constituting the intensity light sensor section and those constituting the area sensor section being those formed by an identical manufacturing process on the active matrix substrate, those light sensor elements constituting the intensity light sensor section being lower in light sensitivity than those constituting the area sensor section by a predetermined percentage.

2. The liquid crystal display device as set forth in claim 1, wherein the light intensity sensor section has a plurality of light sensor elements and obtains the intensity of environmental light on the basis of an average of values of intensity of light detected by those light sensor elements.

3. The liquid crystal display device as set forth in claim 1 or 2, wherein the light intensity sensor section detects the intensity of infrared light in the environment where the liquid crystal display device is placed.

4. The liquid crystal display device as set forth in any one of claims 1 to 3, wherein as seen from the panel surface of the liquid crystal panel, those light sensor elements constituting the intensity light sensor section are smaller in aperture ratio than those constituting the area sensor section by a predetermined percentage.

5. The liquid crystal display device as set forth in claim 4, wherein those light sensor elements constituting the intensity light sensor section include those on which a light blocking section is provided and those on which no light blocking section is provided.

6. The liquid crystal display device as set forth in claim 5, wherein the ratio of the number of those light sensor elements provided with the light blocking section to the number of those not provided with the light blocking section is $(n_1-1):1$ (where $n_1$ is an integer of 2 or greater).

7. The liquid crystal display device as set forth in any one of claims 1 to 3, wherein on each of those light sensor elements constituting the intensity light sensor section, a dark filter is provided which reduces, by a predetermined percentage, light that enters the liquid crystal panel through the surface.

8. The liquid crystal display device as set forth in any one of claims 1 to 3, further comprising a driving circuit for driving the light sensor elements, wherein those light sensor elements constituting the intensity light sensor section include those connected to the driving circuit and those not connected to the driving circuit.

9. The liquid crystal display device as set forth in claim 8, wherein the ratio of the number of those light sensor elements connected to the driving circuit to the number of those not connected to the driving circuit is $(n_2-1):1$ (where $n_2$ is an integer of 2 or greater).

10. The liquid crystal display device as set forth in any one of claims 1 to 9, further comprising a driving circuit that changes, in accordance with the intensity of light as obtained by the light intensity sensor section, a period of sensing time during which those light sensor elements constituting the area sensor section carry out sensing.

F I G. 1

31B    31A            20
(30)   (30)

| A | B | A | B | A | B | A | B | A |
|---|---|---|---|---|---|---|---|---|
| B | A | B | A | B | A | B | A | B |
| A | B | A | B | A | B | A | B | A |
| B | A | B | A | B | A | B | A | B |
| A | B | A | B | A | B | A | B | A |
| B | A | B | A | B | A | B | A | B |
| A | B | A | B | A | B | A | B | A |
| B | A | B | A | B | A | B | A | B |

50 (30)

20a

FIG. 2

F I G. 3

SENSOR A

31A

30a (30)

25

25c

30c (30)

27

X

X'

Z

Z'

R  G  B

4

4

SINGLE PIXEL

R  G  B

F I G. 4

SENSOR B

31B

Y
30b (30)
Y'
25

4

Z
30c (30)
Z'
27

R G B

SINGLE PIXEL

R G B

4

F I G. 5

(a)

(b)

(c)

F I G. 6

F I G. 7

(a)

SENSOR A

(b)

SENSOR B

F I G. 8

LIGHT INTENSITY SENSOR ⌒ 50

30d (30)

25

4

30c (30)

27

R G B

4

SINGLE PIXEL

R G B

# F I G. 9

F I G. 1 O

F I G. 1 1

(a)

T1

(b)

T2

F I G. 1 2

(a)

ILLUMINANCE(lx)    0         10       100      1000    10000    100000

SENSOR A

(b)

ILLUMINANCE(lx)    0         10       100      1000    10000    100000

SENSOR B
(FLUORESCENT LAMP)

SENSOR B
(SUNLAMP)

(c)

ILLUMINANCE(lx)    0         10       100      1000    10000    100000

SENSOR A

SENSOR B

F I G. 1 3

(a)

(b)

F I G. 1 4

SENSOR A

SENSOR B

SINGLE PIXEL

R G B

F I G . 1 5

31A(30)

200

200a
40a
22
23 } 120
21
40b
10a

BL      WHITE LIGHT

LIGHT
INTENSITY
SENSOR

50(30)

LIQUID CRYSTAL
DRIVING CIRCUIT

60

72a

SENSOR
DRIVING
CIRCUIT

73

AREA SENSOR
READOUT
CIRCUIT

76

LIGHT INTENSITY
SENSOR READOUT
CIRCUIT

72a

SENSOR
DRIVING
CIRCUIT

71

TIMING
GENERATING
CIRCUIT

74

COORDINATE
EXTRACTION
CIRCUIT

77

LIGHT INTENSITY
MEASURING
SECTION

75

INTERFACE
CIRCUIT

SENSOR CONTROL SECTION

70a

EP 2 381 345 A1

**INTERNATIONAL SEARCH REPORT**

| International application No. |
| --- |
| PCT/JP2009/065113 |

A. CLASSIFICATION OF SUBJECT MATTER
G06F3/042(2006.01)i, G02F1/133(2006.01)i, G06F3/041(2006.01)i, G09F9/00
(2006.01)i, G09F9/30(2006.01)i

According to International Patent Classification (IPC) or to both national classification and IPC

B. FIELDS SEARCHED

Minimum documentation searched (classification system followed by classification symbols)
G06F3/042, G02F1/133, G06F3/041, G09F9/00, G09F9/30

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2008-203504 A  (Hitachi Displays, Ltd.),<br>04 September, 2008 (04.09.08),<br>Par. Nos. [0004] to [0006]; Figs. 15, 16<br>& US 2008/0198143 A1     & CN 101251783 A | 1-10 |
| A | JP 2008-281616 A  (Seiko Epson Corp.),<br>20 November, 2008 (20.11.08),<br>Par. Nos. [0027] to [0035]; Fig. 4<br>& US 2008/0278458 A1     & CN 101303465 A<br>& KR 10-2008-0099142 A | 1-10 |

☐  Further documents are listed in the continuation of Box C.          ☐   See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after  the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    14 September, 2009 (14.09.09) | Date of mailing of the international search report<br>    06 October, 2009 (06.10.09) |
| --- | --- |
| Name and mailing address of the ISA/<br>    Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62034132 A

- JP 2006018219 A